# DEMANDE DE BREVET EUROPEEN

(11) **EP 1 742 473 A1**
(43) Date de publication de la demande: **10.01.2007**
(21) Numéro de dépôt: 05291468.6
(22) Date de dépôt: 06.07.2005
(51) Int. Cl.: H04N 7/16

(54) **Méthode de transmission d'un flux de données numériques et de messages de contrôle associés audit flux à destination d'équipements mobiles**

(71) Demandeur: Nagra France Sarl, 75015 Paris (FR)
(72) Inventeur: Wendling, Bertrand, 78220 Viroflay (FR)
(74) Mandataire: Nithardt, Joel

(57) **Abrégé**

La présente invention propose une méthode de transmission d'un flux de données numériques et de messages de contrôle associés audit flux à destination d'équipements mobiles. Le flux comprend des salves successives de données d'un contenu encrypté avec des mots de contrôle inclus dans les messages de contrôle transmis en parallèle avec le flux. La méthode est caractérisée en ce qu'elle consiste à insérer un message de contrôle dans chaque salve de contenu transmise, ledit message contenant au moins un mot de contrôle destiné à décrypter le contenu de ladite salve.

## Description

### Domaine de l'invention

La présente invention concerne le domaine de la diffusion par voie hertzienne d'un flux de données numériques selon une norme du type DVB-H (Digital Video Broadcast, Handheld) ou similaire. Le flux est reçu par des équipements mobiles, tels que, par exemple, un téléphone portable, un assistant personnel PDA (Personal Digital Assistant), un récepteur portable de télévision numérique, un ordinateur portable.

Les données diffusées sont en général cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) qui accompagnent les données diffusées.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

### Arrière-plan technique

La technologie DVB-H est issue de la norme DVB-T (Digital Video Broadcast, Terrestrial) avec laquelle elle est largement compatible tout en possédant des caractéristiques particulières dépendant essentiellement des propriétés des équipements de réception mobiles.

Un problème connu des équipements mobiles DVB-H est la capacité limitée des batteries. En effet, la compatibilité avec la norme DVB-T exige des mécanismes de démodulation et de décodage du flux à large bande et à haut débit de données (jusqu'à 10 Mbit/s par canal) qui entraînent une grande consommation d'énergie des circuits électroniques concernés. La solution adoptée pour diminuer la consommation est la transmission du flux non plus en continu mais par salves (burst). L'équipement mobile de réception n'est alors enclenché que périodiquement pour recevoir les salves et en mode veille (standby) pendant les interruptions. Ce mode particulier au DVB-H permet ainsi de réduire la consommation de l'équipement mobile d'un facteur dix ou plus.

Le flux diffusé comprend en général plusieurs services multiplexés comme par exemple un contenu audio/vidéo, des fichiers ou des applications logicielles à télécharger. Dans le mode DVB-T, le flux dans son ensemble est décodé avant de pouvoir accéder à un service sélectionné. L'économie d'énergie réalisée par le mode DVB-H est basée sur le fait que seules les parties du flux contenant les données d'un service sélectionné sont traitées, ce qui nécessite une réorganisation appropriée du flux. Le multiplexage des services est alors effectué selon un échantillonnage temporel (time slicing). Les données d'un service particulier ne sont pas transmises de manière continue mais en salves compactes périodiques avec des interruptions entre les salves.

Dans le cas de la télévision numérique à péage à accès conditionnel, le flux de données comprend le contenu audio/vidéo crypté, des messages de contrôles et des messages d'administration. Les messages de contrôle ECM (Entitlement Control Message) contiennent des mots de contrôle servant à décrypter le contenu audio/vidéo. Dans le mode DVB-T où le flux est transmis de manière continue la décryption est effectuée par un décodeur en direct à la réception des données ou en différé après stockage de tout ou partie du flux. Les messages de contrôle sont décryptés pour permettre l'extraction des mots de contrôle servant à décrypter le contenu diffusé. Afin de synchroniser les messages de contrôle avec le contenu diffusé ou enregistré diverses solutions ont été développées parmi lesquelles on peut citer:
- Le document US2003152364 qui propose l'introduction de plusieurs mots de contrôle dans un message de contrôle ECM. Un tel message contient le mot de contrôle courant pour décrypter le bloc de donnée en cours, les mots de contrôle précédent et suivant ce mot courant pour décrypter un flux enregistré et ceci dans les modes recul ou avance rapide d'un enregistreur audio/vidéo numérique.
- Le document EP1447983 qui traite de la création d'une table de correspondance entre portions de flux enregistré et messages de contrôle accompagnant les parties enregistrées du flux.
- Le document EP0583202 qui décrit la transmission avec chaque programme d'un message de contrôle propre à ce programme avec une certaine fréquence et les messages de contrôle propres aux autres programmes avec une fréquence plus faible. Le message de contrôle du programme sélectionné sert à le décrypter en direct et les autres messages de contrôle sont stockés pouvoir procéder rapidement au décryptage d'un autre programme qui viendrait à être sélectionné.
   Dans la technologie du DVB-H, le flux comprend une pluralité de services transmis par salves successives contenant le contenu crypté (programmes audio/vidéo numériques, fichiers ou applications logicielles, etc.) et les messages de contrôle nécessaires à la décryption du contenu. Lors d'un passage d'un service à un autre ou lors d'interruptions de la réception du flux, il est possible de recevoir des salves de contenu sans recevoir les messages de contrôle correspondants. Ce problème est issu du fait que les salves de messages de contrôle ne sont pas synchronisées avec celles du contenu. Chaque salve étant transmise sous forme de paquets IP (Internet Protocol) indépendants. Lorsque le récepteur est verrouillé sur un canal donné, ce décalage n'a pas d'importance car les mots de contrôle contenus dans les messages de contrôle concernent des blocs transmis ultérieurement par rapport aux blocs courants. Dans le cas par exemple de changements successifs de service ou de canal (zapping) des salves de contenu peuvent être reçues sans pouvoir être décryptées par un mot de contrôle à cause de la non-réception du ou des messages de contrôle correspondants due à l'absence de synchronisation des services "contenu" et "messages de contrôle".
   Les solutions de l'art antérieur selon les exemples cités plus haut ne s'appliquent pas au cas où le flux est composé de salves correspondants à des services indépendants. Du fait que l'équipement mobile n'est activé que pour les services sélectionnés, il ne peut pas recevoir des données des autres services comme dans le cas d'un flux continu et d'un récepteur activé pour recevoir tous les services du flux. En effet dans le mode DVB-T, le flux est décodé dans son ensemble pour accéder à un service donc les messages de contrôles peuvent être reçus constamment même si l'on commute d'un service à un autre.

### Description sommaire de l'invention

Le but de la présente invention est de pallier l'absence de synchronisation entre les salves de différents services transmises dans un flux destiné à des équipements mobiles DVB-H.

Un autre but est d'assurer une réception optimale du contenu en permettant une décryption de toutes les salves malgré des passages fréquents d'un service à un autre, la perte ou la corruption de la réception de messages de contrôle.

Ces buts sont atteints par une méthode de transmission d'un flux de données numériques et de messages de contrôle associés audit flux à destination d'équipements mobiles, ledit flux comprenant des salves successives de données d'un contenu encrypté avec des mots de contrôle inclus dans les messages de contrôle transmis en parallèle avec le flux, ladite méthode est caractérisée en ce qu'elle consiste à insérer un message de contrôle dans chaque salve de contenu transmise, ledit message contenant au moins un mot de contrôle destiné à décrypter le contenu de ladite salve.

La solution consiste à associer en quelque sorte les salves d'un contenu avec les messages de contrôle servant à décrypter le contenu de ces salves. Le message de contrôle est en général placé en tête de la partie utile de la salve, c'est-à-dire après les données d'identification de la salve. Ainsi lors d'un changement de service les messages de contrôles restent toujours disponibles sans devoir attendre leur réception à partir d'autres salves. Les données du contenu peuvent être décryptées dès la réception de la première salve sans interruption ou de brouillage causé par la réception de salves cryptées sans possibilité de les décrypter.

Afin d'assurer la continuité du décryptage en cas de coupures intempestives de la transmission, le message de contrôle associé à une salve peut contenir des mots de contrôles supplémentaires permettant de décrypter les salves suivantes reçues après la coupure. L'équipement mobile peut en effet comporter une mémoire servant à stocker temporairement des mots de contrôle valables pour décrypter un certain nombre de salves à recevoir ultérieurement pour un service donné.

### Brève description des figures

L'invention sera mieux comprise grâce à la description détaillée qui va suivre et qui se réfère aux figures annexées données à titre d'exemples nullement limitatifs.
- La figure 1 illustre un schéma d'un flux DVB-H où les services sont transmis en salves
- la figure 2 montre un schéma d'un flux où les salves des différents services forment un flux continu.
- la figure 3 illustre une salve comprenant un message de contrôle inséré selon l'invention.
- la figure 4 illustre un schéma d'un flux où les salves comprennent chacune un message de contrôle.
- la figure 5 montre un message de contrôle comprenant plusieurs mots de contrôle

### Description détaillée de l'invention

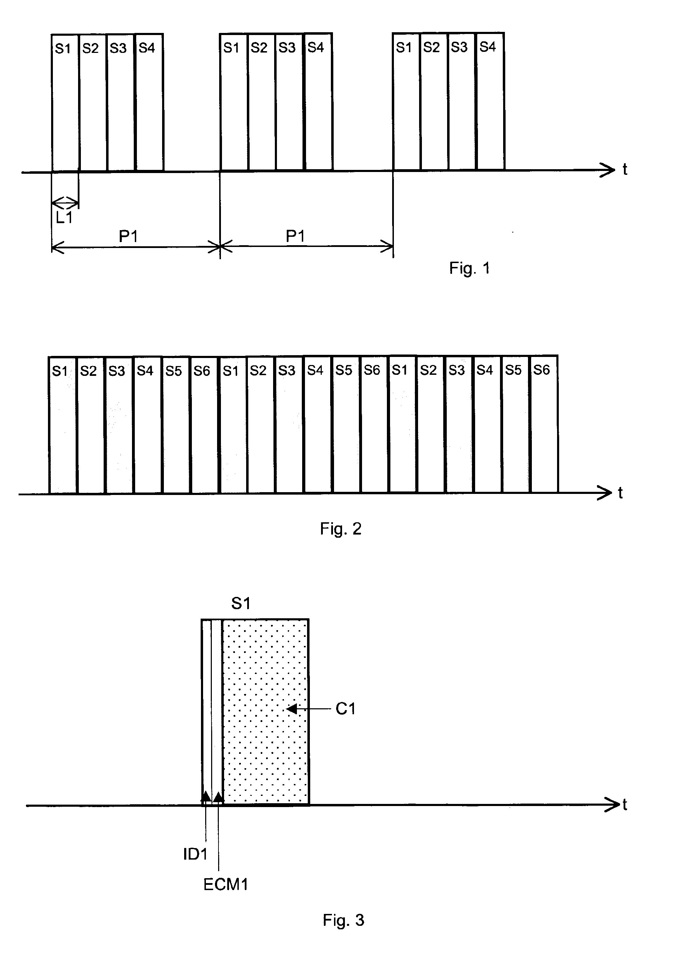

En mode DVB-H, les différents services (S1, S2, S3, S4) multiplexés d'un flux de données numériques sont diffusés par salves périodiques. Pour des raisons d'économie d'énergie évoquées plus haut, l'équipement mobile n'est activé que lors de la réception d'un ou plusieurs services. Par exemple, dans la figure 1, l'équipement n'est actif que pendant la durée (L) d'un service (S1) et ceci pendant des intervalles périodiques (P), tandis qu'il sera en veille durant les intervalles séparant les salves du service (S1).

Le multiplexage des services peut entraîner à nouveau un flux continu et ininterrompu transmis avec un débit constant lorsque des salves de services additionnels sont transmises pendant les périodes d'interruption. La figure 2 montre un exemple où les intervalles entre S4 et S1 de la figure 1 sont comblés par des services supplémentaires S5 et S6. Ce type de flux est reçu de manière intermittente par l'équipement mobile qui se synchronise aux salves d'un ou plusieurs services sélectionnés et commute en mode veille lorsque d'autres services sont transmis. Le rapport entre la période d'interruption entre les salves et la période d'activité de l'équipement mobile lors de la réception de services sélectionnés donne une mesure de l'économie d'énergie du mode DVB-H.

La durée (L) d'une salve est de l'ordre de quelques centaines de milli-secondes tandis que la période (P) intermédiaire d'interruption peut durer jusqu'à quelques secondes. Le rapport entre ces durées peut donc atteindre plus de 90% suivant la configuration des salves du signal diffusé et le nombre de services sélectionnés.

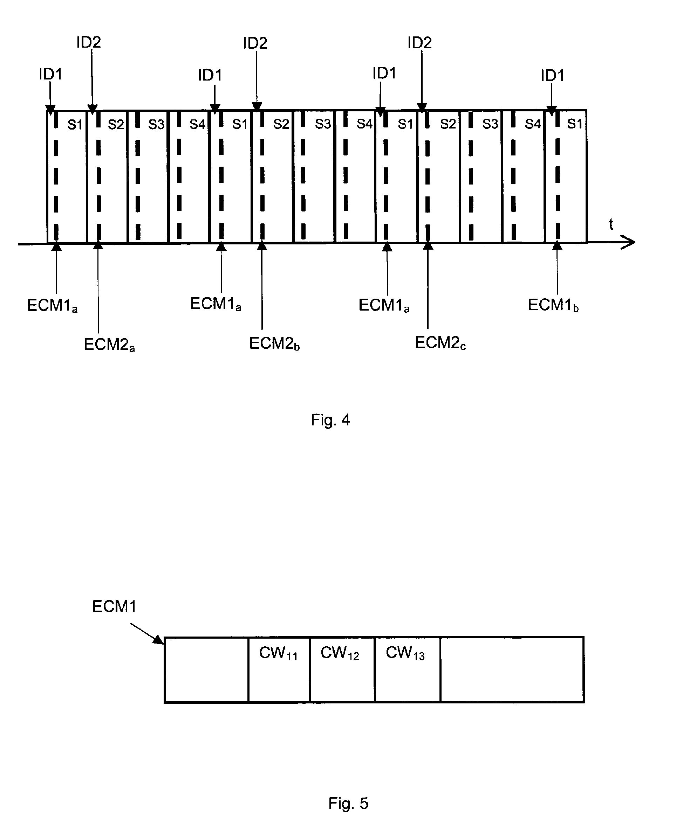

La méthode de l'invention est illustrée par la figure 4 montrant qu'un message de contrôle ECM est inséré dans chaque salve d'un service. Selon une réalisation préférée, le message de contrôle est placé au niveau de l'entête de la salve à la suite de l'identificateur ID et avant le contenu (C1) crypté ou utile de la salve. La figure 3 montre une vue agrandie d'une salve du service S1 contenant un message de contrôle ECM1 après l'identificateur ID1 de la salve. Cet identificateur ID1 est utilisé par l'équipement mobile pour se synchroniser sur le service sélectionné et pour déterminer les périodes d'activation et de mise en veille. Le message de contrôle ECM1 contient au moins un mot de contrôle permettant de décrypter les données du contenu (C1) du service S1 auquel il est associé.

Dans un flux de salves de plusieurs services multiplexés tel que schématisé sur la figure 4, les messages de contrôles, respectivement les mots de contrôle qui y sont inclus peuvent changer d'une salve d'un même service à une autre ou d'un groupe de salve à un autre. Par exemple, pour le service S1, le message de contrôle ECM1ₐ reste constant pendant trois salves pour changer par la suite (ECM1_{B}). Il est aussi envisageable de changer de mot de contrôle à chaque salve comme pour le service S2 de l'exemple où les messages de contrôle (ECM2ₐ, ECM2_{b}, ECM2_{c},...) sont insérés au début des salves ne sont jamais identiques.

L'insertion du message de contrôle au début de la salve permet d'obtenir immédiatement un mot de contrôle lorsque l'équipement mobile commute d'un service à un autre. En effet après avoir lu l'identificateur (ID1, ID2), il extrait le mot de contrôle nécessaire du message de contrôle ECM pour décrypter les données du contenu qui suivent dans la salve. Le mot de contrôle extrait peut être stocké dans une mémoire temporaire de l'équipement mobile afin d'être utilisé pour des prochaines salves lorsqu'un certain nombre de celles-ci contiennent un même message de contrôle comme dans le cas du service S1 de l'exemple.

Dans une réalisation audio/vidéo par exemple où les différents services représentent chacun un canal de télévision, et grâce au message de contrôle précédant les données cryptées, il devient aisé de passer d'un canal à un autre et vice-versa sans interruption (blackout) de l'image ou du son. Le mot de contrôle servant à décrypter les données audio/vidéo est ainsi immédiatement disponible à l'unité de décryption de l'équipement mobile.

Un message de contrôle ECM peut contenir plusieurs mots de contrôle comme schématisé dans la figure 5. Afin d'augmenter la vitesse de traitement des salves, l'équipement mobile stocke plusieurs mots de contrôle (CW₁₁, CW₁₂, CW₁₃) relatifs à un service S1 donné et correspondant à une série de salves de ce service. Selon la configuration matérielle et logicielle (algorithme de décryptage) de l'équipement mobile, il est plus rapide d'extraire un certain nombre de mots de contrôle d'un ou de plusieurs messages et de les stocker que de les extraire chaque fois du message transmis avec les salves. L'équipement mobile extrait des mots de contrôle à partir d'un certain nombre de salves pour les stocker, lorsque ces mots stockés deviennent obsolètes, il extrait et stocke de nouveaux mots à partir des salves suivantes et ainsi de suite.

Le message de contrôle peut aussi contenir en sus du mot de contrôle courant servant à décrypter la salve de données en cours, les mots de contrôle de salves précédentes et ultérieures. Cette variante se révèle utile lorsque l'équipement mobile est pourvu d'une unité de stockage de masse apte à enregistrer tout ou partie des données diffusées. En effet, la mise à disposition de ces mots de contrôle particuliers permet d'effectuer une exploration rapide en avant ou en arrière des données cryptées enregistrées.

## Revendications

1. Méthode de transmission d'un flux de données numériques et de messages de contrôle associés audit flux à destination d'équipements mobiles, ledit flux comprenant des salves successives de données d'un contenu encrypté avec des mots de contrôle inclus dans les messages de contrôle transmis en parallèle avec le flux, ladite méthode est **caractérisée en ce qu'**elle consiste à insérer un message de contrôle dans chaque salve de contenu transmise, ledit message contenant au moins un mot de contrôle destiné à décrypter le contenu de ladite salve.

2. Méthode selon la revendication 1, **caractérisée en ce qu'**elle consiste à insérer le message de contrôle dans l'entête de la salve entre un identificateur de ladite salve et les données du contenu.

3. Méthode selon la revendication 1, **caractérisée en ce qu'**elle consiste à insérer un même message de contrôle dans des salves d'un groupe prédéfini et appartenant à un même service, ledit message contenant un mot de contrôle destiné à décrypter le contenu de chaque salve du groupe.

4. Méthode selon la revendication 1, **caractérisée en ce qu'**elle consiste à insérer un message de contrôle propre à chaque salve d'un service prédéterminé.

5. Méthode selon la revendication 1, **caractérisée en ce qu'**elle consiste à inclure plusieurs mots de contrôle dans un message de contrôle, lesdits mots de contrôle extraits et stockés par l'équipement mobile étant destinés à décrypter le contenu de la salve courante et le contenu de salves ultérieures d'un service prédéterminé.

6. Méthode selon la revendication 1, **caractérisée en ce qu'**elle consiste à inclure dans le message de contrôle, en sus du mot de contrôle courant servant à décrypter la salve courante, les mots de contrôle de salves précédentes et ultérieures d'un service prédéterminé.
